(19) Europäisches Patentamt
European Patent Office
Office européen des brevets

(11) EP 1 270 638 A2

(12) **EUROPÄISCHE PATENTANMELDUNG**

(43) Veröffentlichungstag:
**02.01.2003 Patentblatt 2003/01**

(51) Int Cl.[7]: **C08G 63/64**

(21) Anmeldenummer: **02013487.0**

(22) Anmeldetag: **17.06.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **28.06.2001 DE 10131127**

(71) Anmelder: **Bayer Aktiengesellschaft**
**51368 Leverkusen (DE)**

(72) Erfinder:
- **Kratschmer, Silke, Dr.**
  **47829 Krefeld (DE)**
- **Bunzel, Lothar**
  **47906 Kempen (DE)**
- **Alewelt, Wolfgang, Dr.**
  **47809 Krefeld (DE)**
- **Wilms, Renate**
  **47839 Krefeld (DE)**

(54) **Herstellung und Verwendung von Polyestercarbonaten**

(57) Die Anmeldung betrifft ein Verfahren zur Herstellung von Polyestercarbonaten nach dem Schmelzeumesterungsverfahren mit aliphatischen Dicarbonsäuren sowie die Polyestercarbonate selbst.

EP 1 270 638 A2

## Beschreibung

Die Anmeldung betrifft ein Verfahren zur Herstellung von Polyestercarbonaten nach dem Schmelzeumesterungsverfahren mit aliphatischen Dicarbonsäuren sowie die so erhältlichen Polyestercarbonate selbst.

Die Herstellung von Polyestercarbonaten aus difunktionellen, aliphatischen Carbonsäuren und Dihydroxyverbindungen über das Phasengrenzflächenverfahren ist beispielsweise in EP-A 433 716, US-A 4 983 706 und US-A 5 274 068 beschrieben. Wie die EP-A 433 716 lehrt, lassen sich die für Polyestercarbonate bekannten Carbonsäuren im Phasengrenzflächenverfahren jedoch nur durch eine aufwendige Fahrweise in signifikanten Mengen einbauen.

Der Einbau von aromatischen oder aliphatischen Dicarbonsäuren über das sogenannte Pyridin-Verfahren ist in US-A 3 169 121 beschrieben.

Das Umesterungsverfahren ist für den Einbau von aromatischen Dicarbonsäuren wohlbekannt und z.B. in US-A 4 459 384 beschrieben. Der Einbau von aliphatischen Dicarbonsäuren wird in JP-A 2000 248 057 beschrieben, wobei jedoch hier wie allgemein üblich alle Monomere zu Beginn der Reaktion zusammengegeben und gemeinsam erhitzt bzw. kondensiert werden.

Ebenfalls ein Umesterungsverfahren zum Einbau von aliphatischen Dicarbonsäuren beschreibt JP-A 3 203 926. Die Dicarbonsäuren werden hier mit aromatischen Dihydroxyverbindungen und Dicarbonaten umgesetzt, wobei als Katalysator Alkalioder Erdalkalimetallverbindungen verwendet werden. Neben dem Anteil an eingebauter Dicarbonsäure finden sich keine weiteren Angaben zu möglichen Nebenreaktionen oder zur Eigenfarbe der erhaltenen Polymere.

Polyestercarbonate, die durch das Phasengrenzflächenverfahren hergestellt werden, zeigen eine gute Eigenfarbe, enthalten jedoch zu geringen Anteilen Anhydride der eingesetzten Dicarbonsäuren bzw. noch freie Säure, was unerwünscht ist. Dies ist in EP-A 926 177 beschrieben. Es ist jedoch grundsätzlich das Ziel, die Dicarbonsäuren so vollständig wie möglich in das Polyestercarbonat einzubauen, so dass im Produkt möglichst viel Esterbindungen neben wenig Säure- oder Anhydridstrukturen vorliegen, da diese die Stabilität des Polyestercarbonats beeinträchtigen.

Im Gegensatz dazu zeigen Polyestercarbonate, die nach dem Umesterungsverfahren synthetisiert wurden, zwar wenig Anhydridstrukturen, dafür jedoch üblicherweise eine starke Eigenfärbung, welche wiederum für die meisten Anwendungen möglichst gering sein muss.

Die Aufgabe bestand demnach darin, ein Polyestercarbonat herzustellen, das einerseits möglichst viele Esterbindungen neben wenig Säure- oder Anhydridstrukturen enthält, andererseits aber dennoch eine gute Eigenfarbe aufweist.

Die Aufgabe wurde überraschenderweise durch das erfindungsgemäße Umesterungsverfahren gelöst.

Gegenstand der vorliegenden Anmeldung ist somit ein Verfahren zur Herstellung von Polyestercarbonaten durch Umesterung von Diarylcarbonaten mit Dihydroxyverbindungen und aliphatischen Dicarbonsäuren, dadurch gekennzeichnet, dass die Kondensation in Gegenwart von quartären Oniumverbindungen als Katalysatoren durchgeführt wird, wobei die aliphatischen Dicarbonsäuren erst nach der Oligokondensation der Dihydroxyverbindungen zugegeben werden und die Temperatur 290°C nicht übersteigt.

Ebenfalls Gegenstand der vorliegenden Anmeldung sind weiterhin die nach dem erfindungsgemäßen Verfahren erhältlichen Polyestercarbonate selbst.

Gemäß dem erfindungsgemäßen Verfahren wird in einem ersten Schritt eine Mischung aus Dihydroxyverbindung und Diarylcarbonat in Inertgasatmosphäre und unter reduziertem Druck für 30 - 300 Minuten, bevorzugt für 60 - 150 Minuten bis zu einer Temperatur von 200 - 290°C, bevorzugt von 230 - 290°C, besonders bevorzugt von 250 - 280°C erhitzt, und dabei die entstehende Hydroxyarylkomponente abdestilliert. Anschließend wird in einem zweiten Schritt die Dicarbonsäure, bzw. Dicarbonsäuremischung, zugesetzt und das Reaktionsgemisch zwischen 60 - 200 Minuten, bevorzugt zwischen 90 - 180 Minuten nicht höher als 290°C erhitzt und zum Polyestercarbonat aufkondensiert. In jedem Schritt wird der Druck so gewählt, dass die Hydroxyarylkomponente problemlos abdestilliert werden kann.

Das erfindungsgemäß erhaltene Polyestercarbonat ist farbhell, d.h. es weist eine Farbzahl von < 0,2 auf, weist besonders geringe Anteile an freier Dicarbonsäure oder Anhydridstrukturen auf und erfüllt daher die Formel

$$Q = \frac{x + [10(5y + 4z)]^2}{x} < 1{,}3$$

mit

Q: Kennzahl

x : Gew.-% der veresterten Säure im Polyestercarbonat

y : Gew.-% freier COOH im Polyestercarbonat

z : Anhydridstruktur im Polyestercarbonat

Für das erfindungsgemäße Verfahren geeignete Dicarbonsäuren sind solche der Formel (I)

$$HOOC\text{-}T\text{-}COOH \quad (I)$$

wobei

T einen verzweigten oder linearen, gesättigten oder ungesättigten Alkyl-, Arylalkyl- oder Cycloalkylteil aus 8-40 Kohlenstoffen darstellt.

Bevorzugt sind gesättigte, lineare Alkyldisäuren mit 8-40 Kohlenstoffen, besonders bevorzugt mit 12-36 Kohlenstoffen. Aus diesen Substanzklassen sind wiederum Fettsäuren, besonders bevorzugt hydrierte, dimere Fettsäuren besonders geeignet.

Beispiele für Dicarbonsäuren der Formel (I), bzw. Mischungen solcher Fettsäuren sind
Sebacinsäure,
Dodecandisäure,
Stearinsäure,
Palmitinsäure,
hydrierte Dimerfettsäuren, wie z.B. Pripol 1009 von Uniqema.

Pripol 1009 von Uniqema ist eine Mischung von hydrierten dimeren Fettsäuren, die sich nach Angaben von Uniqema etwa wie folgt zusammensetzt:

| Struktur (jeweils diverse Isomere) | Angaben Uniqema |
|---|---|
| 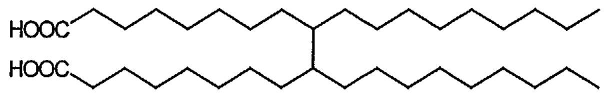 **Linear** | ca. 30% |
| 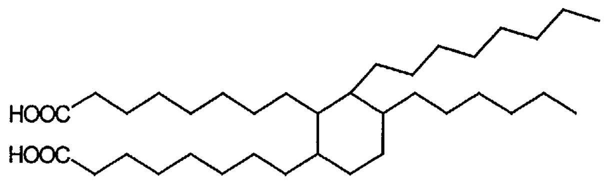 **Zyklisch** | ca. 50% |
| 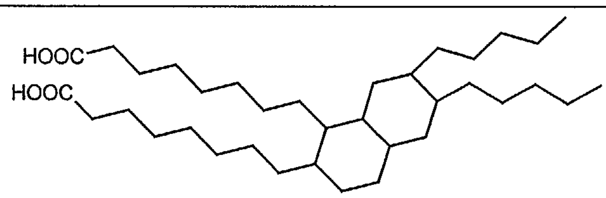 **Bizyklisch** | |
| 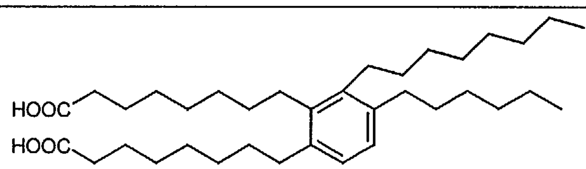 **Aromatisch** | ca. 15-20% |
| 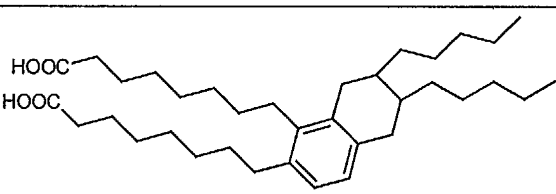 **Aromatisch bizyklisch** | |

Besonders bevorzugt sind Dodecandisäure und Pripol 1009.

Am meisten bevorzugt ist Pripol 1009.

Es können sowohl eine Dicarbonsäure der Formel (I) als auch mehrere Dicarbonsäuren der Formel (I) verwendet werden.

Die verwendeten Dicarbonsäuren wie auch die übrigen verwendeten Rohstoffe sollten selbstverständlich so rein wie möglich sein. Bei käuflichen Produkten ist die Reinheit aber oft stark unterschiedlich. Besonders Fettsäuren oder hydrierte, dimerisierte Fettsäuren können erhebliche Mengen an Nebenprodukten enthalten, die bei der Herstellung entstehen.

Die Dicarbonsäuren können im erfindungsgemäßen Verfahren im Molverhältnis X : 1, gemessen an der Dihydroxyverbindung, eingesetzt werden, wobei $0 < X < 10$, bevorzugt $0{,}01 < X < 1$, besonders bevorzugt $0{,}02 < X < 0{,}5$ und ganz besonders bevorzugt $0{,}08 < X < 0{,}2$ ist.

Die oben oder nachfolgend aufgeführten allgemeinen oder in Vorzugsbereichen aufgeführten Restedefinitionen, Parameter bzw. Erläuterungen können auch untereinander, also zwischen den jeweiligen Bereichen und Vorzugsbereichen beliebig kombiniert werden. Sie gelten für die Endprodukte sowie für die Vor- und Zwischenprodukte und für Verfahren sowie Verfahrensschritte entsprechend.

Für das erfindungsgemäße Verfahren geeignete Dihydroxyverbindungen sind solche der Formel (II)

$$HO\text{-}Ar\text{-}OH \qquad (II)$$

in denen Ar ein aromatischer Rest mit 6 bis 30 C-Atomen ist, bevorzugt mit 6 bis 25 C-Atomen, der einen oder mehrere aromatische Kerne enthalten kann, substituiert sein kann und aliphatische oder cycloaliphatische Reste bzw. Alkylaryle

oder Heteroatome als Brückenglieder enthalten kann.

Beispiele für Dihydroxyverbindungen der Formel (II) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole
sowie deren kernalkylierte und kernhalogenierte Verbindungen.

Diese und weitere geeignete andere Diphenole sind z. B. in den US-A 3 028 365, 3 148 172, 3 275 601, 2 991 273, 3 271 367, 3 062 781, 2 970 131 und 2 999 846, in den DE-A 1 570 703, 2 063 050, 2 063 052, 2 211 0956, der FR-B 1 561 518 und in der Monographie "H. Schnell, Chemistry and Physics of Polycarbonates, Interscience Publishers, New York 1964" beschrieben.

Bevorzugte Dihydroxyverbindungen sind beispielsweise:
4,4'-Dihydroxydiphenyl,
2,2-Bis-(4-hydroxyphenyl)propan,
2,4-Bis-(4-hydroxyphenyl)-2-methylbutan,
1,1-Bis-(4-hydroxyphenyl)cyclohexan,
1,1-Bis-(4-hydroxyphenyl)-4-methylcyclohexan,
α,α'-Bis-(4-hydroxyphenyl)-p-diisopropylbenzol,
α,α'-Bis-(4-hydroxyphenyl)-m-diisopropylbenzol,
Bis-(4-hydroxyphenyl)sulfon,
Bis-(4-hydroxyphenyl)methan,
1,1-Bis-(4-hydroxyphenyl)-3,3,5-trimethylcyclohexan,
Bis-(2,6-dimethyl-4-hydroxyphenyl)propan,
Bis-(4-hydroxyphenyl)hexafluorpropan,
(4-Hydroxyphenyl)-1-phenylethan,
(4-Hydroxyphenyl)diphenylmethan,
Dihydroxydiphenylether,
4,4'-Thiobisphenol,
Bis-(4-Hydroxyphenyl)-1-(1-naphthyl)ethan,
Bis-(4-Hydroxyphenyl)-1-(2-naphthyl)ethan,
Dihydroxy-3-(4-hydroxyphenyl)-1,1,3-trimethyl-1*H*-inden-5-ol,
Dihydroxy-1-(4-hydroxyphenyl)-1,3,3-trimethyl-1*H*-inden-5-ol,
2,2',3,3'-Tetrahydro-3,3,3',3'-tetramethyl-1,1'-Spirobi[1*H*-inden]-5,5'-diol.

Besonders bevorzugt sind
Resorcin,
Bis-(4-Hydroxyphenyl)-1-(1-naphthyl)ethan,
Bis-(4-Hydroxyphenyl)-1-(2-naphthyl)ethan,
2,2-Bis-(4-hydroxyphenyl)propan,
α,α'-Bis-(4-hydroxyphenyl)-p-diisopropylbenzol
α,α'-Bis-(4-hydroxyphenyl)-m-diisopropylbenzol
1,1-Bis-(4-hydroxyphenyl)cyclohexan,
Bis-(4-hydroxyphenyl)-3,3,5-trimethylcyclohexan,
Bis-(4-Hydroxyphenyl)diphenylmethan.

Ganz besonders bevorzugt sind
Bis-(4-hydroxyphenyl)-3,3,5-trimethylcyclohexan,
4,4'-Dihydroxydiphenyl,
2,2-Bis-(4-hydroxyphenyl)propan.

Außerordentlich bevorzugt ist Bis-(4-hydroxyphenyl)-3,3,5-trimethylcyclohexan.

Es können sowohl ein Diphenol der Formel (II) als auch mehrere Diphenole der Formel (II) verwendet werden.

Diarylcarbonate im Sinne vorliegender Erfindung sind solche Kohlensäurediester der Formel (III)

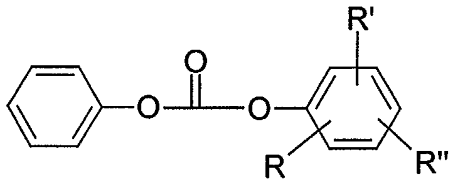

(III)

und Formel (IV),

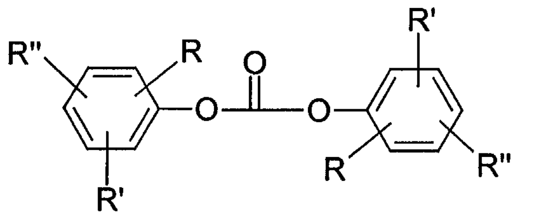

(IV)

wobei R, R' und R" unabhängig voneinander H, gegebenenfalls verzweigte $C_1$-$C_{34}$-Alkyl/Cycloalkyl, $C_7$-$C_{34}$-Alkaryl oder $C_6$-$C_{34}$-Aryl darstellen können, beispielsweise Diphenylcarbonat,
Butylphenyl-phenylcarbonat, Di-Butylphenylcarbonat,
Isobutylphenyl-phenylcarbonat, Di-Isobutylphenylcarbonat,
tert-Butylphenyl-phenylcarbonat, Di-tert-Butylphenylcarbonat,
n-Pentylphenyl-phenylcarbonat, Di-(n-Pentylphenyl)carbonat,
n-Hexylphenyl-phenylcarbonat, Di-(n-Hexylphenyl)carbonat,
Cyclohexylphenyl-phenylcarbonat, Di-Cyclohexylphenylcarbonat,
Phenylphenol-phenylcarbonat, Di-Phenylphenolcarbonat,
Isooctylphenyl-phenylcarbonat, Di-Isooctylphenylcarbonat,
n-Nonylphenyl-phenylcarbonat, Di-(n-Nonylphenyl)carbonat,
Cumylphenyl-phenylcarbonat, Di-Cumylphenylcarbonat,
Naphthylphenyl-phenylcarbonat, Di-Naphthylphenylcarbonat,
Di-tert-Butylphenyl-phenylcarbonat, Di-(Di-tert-Butylphenyl)carbonat,
Dicumylphenyl-phenylcarbonat, Di-(Dicumylphenyl)carbonat,
4-Phenoxyphenyl-phenylcarbonat, Di-(4-Phenoxyphenyl)carbonat,
3-Pentadecylphenyl-phenylcarbonat, Di-(3-Pentadecylphenyl)carbonat
Tritylphenyl-phenylcarbonat, Di-Tritylphenylcarbonat,
bevorzugt
Diphenylcarbonat,
tert-Butylphenyl-phenylcarbonat, Di-tert-Butylphenylcarbonat,
Phenylphenol-phenylcarbonat, Di-Phenylphenolcarbonat,
Cumylphenyl-phenylcarbonat, Di-Cumylphenylcarbonat,
besonders bevorzugt Diphenylcarbonat.

Daneben können die als Carbonate eingesetzten phenolischen Verbindungen auch direkt als Hydroxyaryle neben einem der genannten Carbonate verwendet werden, um die Endgruppe des Polyestercarbonats zu beeinflussen. Bevorzugte Mischungen sind solche mit Diphenylcarbonat. Nach dem erfindungsgemäßen Verfahren besteht die Möglichkeit, das Hydroxyaryl oder die hydroxyaryltragende Verbindung zu jedem Zeitpunkt der Reaktion zuzugeben, bevorzugt zu Beginn der Reaktion, und die Zugabe kann in mehrere Portionen aufgeteilt werden. Der Anteil an freiem Hydroxyaryl kann 0,4 - 17 mol-%, bevorzugt 1,3 - 8,6 mol-% (bezogen auf die Dihydroxyverbindung) betragen. Dabei kann die Zugabe sowohl vor der Reaktion als auch ganz oder teilweise während der Reaktion erfolgen.

Die Kohlensäurediester werden, bezogen auf die Summe aus Dihydroxyverbindung und Dicarbonsäure, im Verhältnis 1 zu 0,9 bis 1,3, bevorzugt 1 : 1,0 bis 1 : 1,2 eingesetzt, besonders bevorzugt 1,0 - 1,1. Es können auch Mischungen der oben genannten Kohlensäurediester oder Dicarbonsäuren eingesetzt werden.

Für die Synthese können Ammonium- oder Phosphoniumverbindungen als Katalysatoren eingesetzt werden. Sie werden bevorzugt in Mengen von 0,0001 bis 0,5 mol-%, bezogen auf die Summe aus Dicarbonsäure und Dihydroxyverbindung, besonders bevorzugt in Mengen von 0,001 bis 0,2 mol-%, eingesetzt.

Bevorzugt werden als Katalysator für die Herstellung der erfindungsgemäßen Polyestercarbonate Phosphoniumsalze verwendet, gegebenenfalls in Kombination mit anderen geeigneten Katalysatoren, die nicht zu erhöhter Eigenfarbe führen.

Phosphoniumsalze im Sinne der Erfindung sind solche der Formel (V),

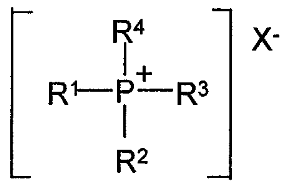

(V)

wobei $R^{1-4}$ dieselben oder verschiedene $C_1$-$C_{10}$-Alkyle, $C_6$-$C_{10}$-Aryle, $C_7$-$C_{10}$-Aralkyle oder $C_5$-$C_6$-Cycloalkyle sein können, bevorzugt Methyl oder $C_6$-$C_{14}$-Aryle, besonders bevorzugt Methyl oder Phenyl, und $X^-$ ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R $C_6$-$C_{14}$-Aryl oder $C_7$-$C_{12}$-Aralkyl, bevorzugt Phenyl, sein kann.

Bevorzugte Katalysatoren sind
Tetraphenylphosphoniumchlorid,
Tetraphenylphosphoniumhydroxid,
Tetraphenylphosphoniumphenolat,
besonders bevorzugt Tetraphenylphosphoniumphenolat.

Die Polyestercarbonate können gezielt verzweigt werden und können daher geringe Mengen von 0,02 bis 3,6 mol-% (bezogen auf die Summe aus Dicarbonsäure und Dihydroxyverbindung) an Verzweigern enthalten. Geeignete Verzweiger sind die für die Polycarbonatherstellung geeigneten Verbindungen mit drei und mehr funktionellen Gruppen, vorzugsweise solche mit drei oder mehr als drei phenolischen OH-Gruppen, beispielsweise 1,1,1-Tri-(4-hydroxyphenyl)ethan und Isatinbiskresol.

Zur Änderung der Eigenschaften können den erfindungsgemäßen Polyestercarbonaten Hilfs- und Verstärkungsstoffe zugemischt werden. Als solche sind u. a. in Betracht zu ziehen: Thermo- und UV-Stabilisatoren, Fließhilfsmittel, Entformungsmittel, Flammschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z.B. in WO 99/55772, S. 15 - 25, und in "Plastics Additives", R. Gächter und H. Müller, Hanser Publishers 1983, beschrieben.

Weiterhin können den erfindungsgemäßen Polyestercarbonaten auch andere Polymere zugemischt werden, z.B. Polyolefine, Polyurethane, Polyester, Acrylnitrilbutadienstyrol und Polystyrol.

Der Zusatz dieser Stoffe erfolgt vorzugsweise auf herkömmlichen Aggregaten zum fertigen Polyestercarbonat, kann jedoch, je nach den Erfordernissen, auch auf einer anderen Stufe des Herstellverfahrens erfolgen.

Die nach dem erfindungsgemäßen Verfahren erhältlichen Polyestercarbonate können auf üblichen Maschinen, beispielsweise auf Extrudern oder Spritzgussmaschinen, zu beliebigen Formkörpern, beispielsweise zu Folien oder Platten, in üblicher Weise verarbeitet werden.

Ein weiterer Gegenstand der vorliegenden Erfindung ist daneben die Verwendung der erfindungsgemäßen Polyestercarbonate bzw. der entsprechenden Formmassen zur Herstellung von Formkörpern und Extrudaten, insbesondere optischen Artikeln, Folien und Platten, bzw. die entsprechenden Formkörper, vorzugsweise optischen Artikel, hergestellt aus den erfindungsgemäßen Polyestercarbonaten.

Beispiele für diese Verwendung sind, ohne sie beschränken zu wollen:

1. Sicherheitsscheiben, die bekanntlich in vielen Bereichen von Gebäuden, Fahrzeugen und Flugzeugen erforderlich sind, sowie als Schilde von Helmen.

2. Herstellung von Extrusions- und Lösungsfolien für Displays oder Elektromotoren, auch Skifolien.

3. Herstellung von lichtdurchlässigen Platten, insbesondere von Hohlkammerplatten, beispielsweise zum Abdekken von Gebäuden wie Bahnhöfen, Gewächshäusern und Beleuchtungsanlagen.

4. Zur Herstellung von Ampelgehäusen oder Verkehrsschildern.

5. Als transluzente Kunststoffe mit einem Gehalt an Glasfasern gegebenenfalls für lichttechnische Zwecke (siehe beispielsweise DE-OS 1 554 020).

6. Zur Herstellung von Präzisionsspritzgussteilen.

7. Optische Anwendungen, wie optische Speicher (CD, DVD, MD), Schutzbrillen oder Linsen für Foto- und Filmkameras (siehe beispielsweise DE-OS 2 701 173).

8. Für Steckergehäuse sowie Steckverbinder.

9. Als Trägermaterial für organische Fotoleiter.

10. Zur Herstellung von Leuchten, z. B. Scheinwerferlampen, als sogenannte "head-lamps" oder Streulichtscheiben oder Lampenabdeckungen.

11. Für medizinische Anwendungen, z.B. Oxygenatoren, Dialysatoren.

12. Für Lebensmittelanwendungen.

13. Für Anwendungen im Automobilbereich.

14. Für Sportartikel.

15. Für Haushaltsartikel, wie z. B. Küchenspülen und Briefkastengehäuse.

16. Für Gehäuse, wie z.B. Elektroverteilerschränke, Elektrogeräte, Haushaltsgeräte.

17. Bauteile von Haushaltsartikeln, Elektro- und Elektronikgeräten.

18. Zur Herstellung von Motorrad- und Schutzhelmen.

19. Für sonstige Anwendungen, wie z. B. Stallmasttüren oder Tierkäfige.

Ganz besonders geeignet sind die erfindungsgemäßen Polyestercarbonate für die Herstellung von optischen und magnetooptischen Artikeln, insbesondere Datenspeicher wie CD, DVD, MD und deren Abkömmlinge, d.h. beschreibbare und wiederbeschreibbare Datenträger, z.B. CD-ROM, CD-R, CD-RW, DVD-ROM, HD-DVD und andere.

## Beispiele

Die relative Lösungsviskosität wurde in Dichlormethan bei einer Konzentration von 5 g/l bei 25°C bestimmt.
Der Gehalt an phenolischem OH wird durch IR-Messung erhalten. Zu diesem Zweck wird eine Differenzmessung von einer Lösung aus 2 g Polymer in 50 ml Dichlormethan gegenüber reinem Dichlormethan vermessen und die Extinktionsdifferenz bei 3582 $cm^{-1}$ bestimmt.
Der Gehalt an Gew.-% der veresterten Säure (x) im Polyestercarbonat wird anhand einer Lösung von 1 g Polyestercarbonat in 100 ml Dichlormethan ermittelt. Hierfür wird ein IR-Spektrum der Lösung aufgenommen und nach der PLS-Methode ausgewertet. Bei der PLS-Auswertung werden die Spektralbereiche 1919-1581 $cm^{-1}$ sowie 2739-2894 $cm^{-1}$ verwendet. Die Kalibrierung erfolgte mit 29 Proben bekannter Zusammensetzung.
Die Bestimmung der freien Carbonsäuregruppen im Polyestercarbonat (y) erfolgte ebenfalls über IR-Spektroskopie an der obigen Lösung. Es wurden Spektren von Dichlormethan, Wasserdampf und einem säure- und anhydridfreien Polyestercarbonat mit 20 Gew.-% Pripol subtrahiert und die Extinktionsdifferenz bei 1709 $cm^{-1}$ ausgewertet. Die Messung wurde an Polyestercarbonaten mit verschiedenen Pripol-Gehalten kalibriert. Werte $< 0{,}01$ wurden gleich Null gesetzt.
Die Ermittlung der Anhydrid-Struktur (z) erfolgte anhand des obigen IR-Spektrums durch Auswertung der Extinktion bei 1816 $cm^{-1}$ abzüglich der Extinktion bei 1860 $cm^{-1}$ sowie eines Beitrags von 0,031. Die Methode ist nicht kalibriert.
Die Farbzahl wurde als Differenz der Extinktion bei 420 nm und 700 nm in Dichlormethan bei einer Konzentration von 2,4 g/50 ml und einer Schichtdicke von 10 cm ermittelt.

### Beispiel 1

In einem 500 ml Dreihalskolben mit Rührer, Innenthermometer und Vigreuxkolonne (30 cm, verspiegelt) mit

Brücke werden 53,94 g (0,174 mol) Bisphenol TMC, 45,41 g (0,212 mol) Diphenylcarbonat und 0,0494 g ($8 \cdot 10^{-5}$ mol) Tetraphenylphosphoniumphenolat (wird als Mischkristall mit 30 Gew.-% Phenol bezogen auf den Mischkristall zudosiert) eingewogen. Die Apparatur wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 30 Minuten abdestilliert. Nun wird die Temperatur auf 235°C erhöht, nach 15 Minuten das Vakuum auf 60 mbar und nach weiteren 15 Minuten die Temperatur auf 250°C eingestellt. Nach wiederum 15 Minuten wird die Temperatur auf 280°C erhöht und 14,63 g (0,026 mol) Pripol 1009 zugegeben und eine Stunde gerührt. Das Vakuum wird anschließend auf 0,5 mbar reduziert und weitere 120 Minuten gerührt. Die Ergebnisse sind in Tabelle 1 zusammengefasst.

**Beispiel 2**

1078,80 g (3,48 mol) Bisphenol TMC, 891,16 g (4,16 mol) Diphenylcarbonat und 0,9874 g ($1,6 \cdot 10^{-3}$ mol) Tetraphenylphosphoniumphenolat (wird als Mischkristall mit 30 Gew.-% Phenol bezogen auf den Mischkristall zudosiert) werden in einen Rührbehälter eingewogen. Der Behälter wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 60 Minuten abdestilliert. Nun wird die Temperatur auf 235°C erhöht, nach 15 Minuten das Vakuum auf 60 mbar und nach weiteren 15 Minuten die Temperatur auf 250°C eingestellt. Nach wiederum 15 Minuten wird die Temperatur auf 280°C erhöht und 292,50 g (0,52 mol) Pripol 1009 zugegeben und eine Stunde gerührt. Das Vakuum wird anschließend auf 0,5 mbar reduziert und weitere 75 Minuten gerührt. Die Ergebnisse sind in Tabelle 1 zusammengefasst.

**Beispiel 3**

1078,80 g (3,48 mol) Bisphenol TMC, 891,16 g (4,16 mol) Diphenylcarbonat und 0,2469 g ($4 \cdot 10^{-4}$ mol) Tetraphenylphosphoniumphenolat (wird als Mischkristall mit 30 Gew.-% Phenol bezogen auf den Mischkristall zudosiert) werden in einen Rührbehälter eingewogen. Der Behälter wird durch Anlegen von Vakuum und Spülen mit Stickstoff (dreimal) vom Luftsauerstoff befreit und das Gemisch bei 150°C aufgeschmolzen. Die Temperatur wird auf 190°C erhöht und das entstehende Phenol über 60 Minuten abdestilliert. Nun wird die Temperatur auf 235°C erhöht, nach 15 Minuten das Vakuum auf 60 mbar und nach weiteren 15 Minuten die Temperatur auf 250°C eingestellt. Nach wiederum 15 Minuten wird die Temperatur auf 280°C erhöht und 292,50 g (0,52 mol) Pripol 1009 zugegeben und eine Stunde gerührt. Das Vakuum wird anschließend auf 0,5 mbar reduziert und weitere 120 Minuten gerührt. Die Ergebnisse sind in Tabelle 1 zusammengefasst.

**Beispiel 4**

In einem 500 ml Dreihalskolben mit Rührer, Innenthermometer und Vigreuxkolonne (30 cm, verspiegelt) mit Brücke werden 53,94 g (0,174 mol) Bisphenol TMC, 45,84 g (0,214 mol) Diphenylcarbonat und 0,0494 g ($8 \cdot 10^{-5}$ mol) Tetraphenylphosphoniumphenolat (wird als Mischkristall mit 30 Gew.-% Phenol bezogen auf den Mischkristall zudosiert) eingewogen. Die Apparatur wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 30 Minuten abdestilliert. Nun wird die Temperatur auf 235°C erhöht, nach 15 Minuten das Vakuum auf 60 mbar und nach weiteren 15 Minuten die Temperatur auf 250°C eingestellt. Nach wiederum 15 Minuten wird die Temperatur auf 280°C erhöht und 5,99 g (0,026 mol) Dodecandisäure zugegeben und eine Stunde gerührt. Das Vakuum wird anschließend auf 0,5 mbar reduziert und weitere 60 Minuten gerührt. Die Ergebnisse sind in Tabelle 1 zusammengefasst.

**Beispiel 5**

In einem 500 ml Dreihalskolben mit Rührer, Innenthermometer und Vigreuxkolonne (30 cm, verspiegelt) mit Brücke werden 41,094 g (0,180 mol) Bisphenol A, 44,99 g (0,210 mol) Diphenylcarbonat und 0,0049 g ($8 \cdot 10^{-6}$ mol) Tetraphenylphosphoniumphenolat (wird als Mischkristall mit 30 Gew.-% Phenol bezogen auf den Mischkristall zudosiert) eingewogen. Die Apparatur wird durch Anlegen von Vakuum und Spülen mit Stickstoff (dreimal) vom Luftsauerstoff befreit und das Gemisch bei 150°C aufgeschmolzen. Die Temperatur wird auf 190°C erhöht und 30 Minuten gerührt. Anschließend wird das entstehende Phenol bei 100 mbar über 20 Minuten abdestilliert. Nun wird die Temperatur auf 235°C erhöht, nach 15 Minuten das Vakuum auf 60 mbar und nach weiteren 15 Minuten die Temperatur auf 250°C eingestellt. Nach wiederum 15 Minuten werden 4,61 g (0,02 mol) Dodecandisäure zugegeben.Nach 15 Minuten bei 60 mbar wird das Vakuum auf 5 mbar eingestellt und nach 30 Minuten auf Hochvakuum erhöht. Nach weiteren 15

Minuten wird die Temperatur auf 260°C erhöht und 30 Minuten gerührt. Die Ergebnisse sind in Tabelle 1 zusammengefasst.

**Vergleichsbeispiel 1**

1078,80 g (3,48 mol) Bisphenol TMC, 908,29 g (4,24 mol) Diphenylcarbonat und 0,9874 g ($1,6 \cdot 10^{-3}$ mol) Tetraphenylphosphoniumphenolat (wird als Mischkristall mit 30 Gew.-% Phenol bezogen auf den Mischkristall zudosiert) werden in einen Rührbehälter eingewogen. Der Behälter wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 60 Minuten abdestilliert. Nun wird die Temperatur auf 235°C erhöht, nach 30 Minuten das Vakuum auf 60 mbar erhöht und 292,50 g (0,52 mol) Pripol 1009 zugegeben. Nach weiteren 15 Minuten wird die Temperatur auf 250°C und das Vakuum anschließend auf 5 mbar eingestellt. Nach wiederum 15 Minuten wird die Temperatur auf 280°C erhöht und nach 15 Minuten das Vakuum auf 0,5 mbar angelegt, dann wird die Temperatur auf 300°C eingestellt und weitere 90 Minuten gerührt. Die Ergebnisse sind in Tabelle 1 zusammengefasst.

**Vergleichsbeispiel 2**

1078,80 g (3,48 mol) Bisphenol TMC, 908,29 g (4,24 mol) Diphenylcarbonat und 0,2469 g ($4 \cdot 10^{-4}$ mol) Tetraphenylphosphoniumphenolat (wird als Mischkristall mit 30 Gew.-% Phenol bezogen auf den Mischkristall zudosiert) werden in einen Rührbehälter eingewogen. Der Behälter wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 60 Minuten abdestilliert. Nun wird die Temperatur auf 235°C erhöht, 292,50 g (0,52 mol) Pripol 1009 zugegeben und nach 30 Minuten das Vakuum auf 60 mbar erhöht. Nach 15 Minuten wird die Temperatur auf 250°C und nach weiteren 15 Minuten das Vakuum langsam auf 5 mbar sowie die Teperatur auf 280°C eingestellt. Anschließend wird ein Vakuum von 1 mbar angelegt, die Temperatur auf 300°C eingestellt und weitere 90 Minuten gerührt. Die Ergebnisse sind in Tabelle 1 zusammengefasst.

**Vergleichsbeispiel 3**

In einem 500 ml Dreihalskolben mit Rührer, Innenthermometer und Vigreuxkolonne (30 cm, verspiegelt) mit Brücke werden 53,94 g (0,174 mol) Bisphenol TMC, 45,84 g (0,214 mol) Diphenylcarbonat, 5,99 g (0,026 mol) Dodecandisäure und 0,0494 g ($8 \cdot 10^{-5}$ mol) Tetraphenylphosphoniumphenolat (wird als Mischkristall mit 30 Gew.-% Phenol bezogen auf den Mischkristall zudosiert) eingewogen. Die Apparatur wird durch Anlegen von Vakuum und Spülen mit Stickstoff (dreimal) vom Luftsauerstoff befreit und das Gemisch bei 150°C aufgeschmolzen. Die Temperatur wird auf 190°C erhöht und das entstehende Phenol über 30 Minuten abdestilliert. Nun wird ein Vakuum von 100 mbar angelegt und nach 20 Minuten die Temperatur auf 235°C erhöht. Nach 15 Minuten wird das Vakuum auf 60 mbar und nach weiteren 15 Minuten die Temperatur auf 250°C eingestellt. Nach wiederum 15 Minuten wird das Vakuum auf 5 mbar und nach wiederum 15 Minuten die Temperatur auf 280°C erhöht. Nach 15 Minuten wird das Vakuum auf 0,5 mbar eingestellt, nach wiederum 15 Minuten die Temperatur auf 300°C erhöht und weitere 30 Minuten gerührt. Die Ergebnisse sind in Tabelle 1 zusammengefasst.

**Vergleichsbeispiel 4**

In einem 500 ml Dreihalskolben mit Rührer, Innenthermometer und Vigreuxkolonne (30 cm, verspiegelt) mit Brücke werden 41,09 g (0,180 mol) Bisphenol A, 49,27 g (0,23 mol) Diphenylcarbonat, 4,61 g (0,02 mol) Dodecandisäure und 0,1225 g ($2 \cdot 10^{-6}$ mol) Tetraphenylphosphoniumphenolat (wird als Mischkristall mit 30 Gew.-% Phenol bezogen auf den Mischkristall zudosiert) eingewogen. Die Apparatur wird durch Anlegen von Vakuum und Spülen mit Stickstoff (dreimal) vom Luftsauerstoff befreit und das Gemisch bei 150°C aufgeschmolzen. Die Temperatur wird auf 190°C erhöht und 30 Minuten gerührt. Anschließend wird das entstehende Phenol bei 100 mbar über 20 Minuten abdestilliert. Nun wird die Temperatur auf 235°C erhöht, nach 15 Minuten das Vakuum auf 60 mbar und nach weiteren 15 Minuten die Temperatur auf 250°C eingestellt. Nach wiederum 15 Minuten wird das Vakuum auf 5 mbar eingestellt und nach 15 Minuten die Temperatur auf 300°C erhöht. Nach weiteren 15 Minuten werden 0,5 mbar eingestellt, 15 Minuten später die Temperatur auf 300°C erhöht und 30 Minuten gerührt. Die Ergebnisse sind in Tabelle 1 zusammengefasst.

Vergleichsbeispiel 5

In einem 2000 ml- Dreihalskolben mit Rührer, Thermometer und Rückflusskühler werden 30 g Dichlormethan und 40 g Wasser vorgelegt. Unter Rühren werden in das vorgelegte Gemisch in 10 Minuten zeitgleich eine Lösung 1

von 81 g TMC-Bisphenol in 400 g Wasser und 59 g 48 %iger NaOH, eine Lösung 2 von 22 g Dimerfettsäure und 60 g Phosgen in 520 g Dichlormethan und eine Lösung 3 von 1,35 g p-tert. Butylphenol und 0,34 g Ethylpiperidin in 70 g Dichlormethan zudosiert. Ein alkalischer pH-Wert > 11 wird durch gleichzeitige Zudosierung von 210 g 25 %ige NaOH eingestellt. Nach Beendigung der Zudosierungen wird weitere 15 Minuten zur Vervollständigung der Reaktion nachgerührt. Anschließend wird die organische Phase abgetrennt, mit verdünnter Säure und dann mit demineralisiertem Wasser gewaschen, bis die Waschphasen nahezu elektrolytfrei sind. Die organische Phase wird eingeengt und 16 Stunden bei 80°C im Vakuumtrockenschrank im Wasserstrahlvakuum getrocknet.

Tabelle 1

| Bsp. | Eta rel | FZ | % OH | x | y | z | Q |
|---|---|---|---|---|---|---|---|
| Bsp. 1 | 1,175 | 0,166 | 0,021 | 19,7 | 0 | 0 | 1 |
| Bsp. 2 | 1,179 | 0,157 | 0,036 | 18,8 | 0 | 0 | 1 |
| Bsp. 3 | 1,170 | 0,139 | 0,020 | 19,3 | 0 | 0 | 1 |
| Bsp. 4 | 1,172 | 0,089 | 0,037 | 8,8 | 0 | 0 | 1 |
| Bsp. 5 | 1,210 | 0,051 | 0,075 | 7,7 | 0 | 0 | 1 |
| Vergl. Bsp. 1 | 1,183 | 0,522 | 0,006 | 18,6 | 0 | 0 | 1 |
| Vergl. Bsp. 2 | 1,179 | 0,455 | 0,012 | 18,2 | 0 | 0 | 1 |
| Vergl. Bsp. 3 | 1,150 | 0,205 | 0,007 | 8,4 | 0 | 0 | 1 |
| Vergl. Bsp. 4 | 1,227 | 1,000 | 0,006 | 9,1 | 0 | 0 | 1 |
| Vergl. Bsp. 5 | 1,186 | | 0,073 | 19,0 | 0,04 | 0,015 | 1,4 |

Die Beispiele belegen klar die überraschende Überlegenheit der erfindungsgemäßen Polyestercarbonate, die bei gleicher Q-Zahl eine im Vergleich zu den nach üblichen Umesterungsverfahren (d.h. in einem Schritt werden alle Edukte gleichzeitig miteinander umgesetzt bzw. bis 300°C erhitzt) hergestellten Polyestercarbonaten deutlich überlegene Farbzahl aufweisen.

**Patentansprüche**

1. Verfahren zur Herstellung von Polyestercarbonaten durch Umesterung von Diarylcarbonaten mit Dihydroxyverbindungen und aliphatischen Dicarbonsäuren, **dadurch gekennzeichnet, dass** die Kondensation in Gegenwart von quartären Oniumverbindungen als Katalysatoren durchgeführt wird, wobei die aliphatischen Dicarbonsäuren erst nach der vorherigen Oligokondensation der Dihydroxyverbindungen in einem zweiten Schritt zugegeben werden und die Temperatur 290°C nicht übersteigt.

2. Verfahren gemäß Anspruch 1, **dadurch gekennzeichnet, dass** der Katalysator eine Phosphoniumverbindung ist.

3. Verfahren gemäß Anspruch 2, **dadurch gekennzeichnet, dass** der Katalysator Tetraphenylphosphoniumphenolat ist.

4. Verfahren gemäß Anspruch 3, **dadurch gekennzeichnet, dass** der Katalysator in Mengen von 0,0001 bis 0,5 mol-%, bezogen auf die Summe aus Dicarbonsäure und Dihydroxyverbindung, verwendet wird.

5. Polyestercarbonat, **dadurch gekennzeichnet, dass** das Polyestercarbonat eine Farbzahl von < 0.2 aufweist und die Formel

$$Q = \frac{x + [10(5y + 4z)]^2}{x} < 1,3$$

mit

Q: Kennzahl

x : Gew.-% der veresterten Säure im Polyestercarbonat
y : Gew.-% freier COOH im Polyestercarbonat
z : Anhydridstruktur im Polyestercarbonat

erfüllt.

**6.** Verwendung der Polyestercarbonate gemäß Anspruch 1-5 für die Herstellung von Formmassen.